# EUROPÄISCHE PATENTANMELDUNG

(11) **EP 3 012 051 A1**
(43) Veröffentlichungstag der Anmeldung: **27.04.2016**
(21) Anmeldenummer: 14190026.6
(22) Anmeldetag: 23.10.2014
(51) Int. Cl.: B23B 49/00, B25F 5/00, B25H 1/00, B23Q 17/24, B23Q 17/22

(54) **PROJIZIERTE SKALA FÜR TIEFENMESSUNG**

(71) Anmelder: HILTI Aktiengesellschaft, 9494 Schaan (LI)
(72) Erfinder: Bahr, Dominik, 86971 Peiting (DE); Zacher, Martin, 75365 Calw (DE)
(74) Vertreter: Hilti Aktiengesellschaft Corporate Intellectual Property

(57) **Zusammenfassung**

Vorrichtung (2) zur Bestimmung einer Eindringtiefe in einem mit einem Bohrwerkzeug einer Bohrwerkzeugmaschine (1) von einer Werkstückoberfläche (WO) aus in ein Werkstück (W) gebohrten Bohrloch. Die Vorrichtung enthält wenigstens eine Lichtquelle (9) zum Projizieren eines Lichtfelds (17) beispielsweise an einem von der Bohrwerkzeugmaschine (1) zu bearbeitenden Werkstück (W). Die Lichtquelle (9) ist so zu der Bohrwerkzeugmaschine (1) positioniert, dass eine Mittelachse (L) der Lichtquelle (9) in einem Winkel (α) zu einer Mittelachse (N) der Bohrwerkzeugmaschine (1) verläuft und wenigstens ein erstes Blockierungselement (12a, 12b, 12c) zum teilweisen Abdecken der Lichtquelle (9) vorgesehen sind, welches eine Skaliereinrichtung (19) an dem Lichtfeld (17) erzeugt.

## Beschreibung

Die vorliegende Erfindung bezieht sich auf eine Vorrichtung zur Bestimmung einer Eindringtiefe in einem mit einem Bohrwerkzeug einer Bohrwerkzeugmaschine von einer Werkstückoberfläche aus in ein Werkstück gebohrten Bohrloch, enthaltend, wenigstens eine Lichtquelle zum Projizieren eines Lichtfelds beispielsweise an einem von der Bohrwerkzeugmaschine zu bearbeitenden Werkstück.

Vorrichtungen zum Bestimmen einer Eindringtiefe eines Bohrwerkzeugs in ein zu bearbeitendes Werkstück sind gemäß dem Stand der Technik weit verbreitet und bekannt.

Derartige Vorrichtungen können beispielsweise relativ einfach in Form eines Lineals ausgestaltet sein, welches in der Länge verstellbar und parallel zu dem Bohrer der Bohrwerkzeugmaschine angeordnet ist.

Darüber hinaus können Vorrichtungen zur Bestimmung einer Eindringtiefe auch komplexer ausgestaltet sein, wie nachfolgend erläutert wird.

Gemäß dem Stand der Technik ist beispielsweise eine Vorrichtung bekannt, bei der auf einer Bohrwerkzeugmaschine zwei Laserlichtquellen in einem Winkel zueinander positioniert sind, die zwei konvergierende Lichtstrahlbündel von der Bohrwerkzeugmaschine in Richtung einer Werkstückoberfläche emittieren. Die zwei Lichtstrahlbündel sind als zwei Lichtkreise an der Werkstückoberfläche erkennbar. Die zwei Lichtkreise bewegen sich an der Werkstückoberfläche aufeinander zu, wenn die Bohrwerkzeugmaschine Richtung der Werkstückoberfläche bewegt wird. Die zwei Laserlichtquellen sind dabei so zueinander verstellbar, dass bei einer Überdeckung der zwei Lichtkreise dem Anwender ein bestimmter Abstand der Bohrwerkzeugmaschine zu der Werkstückoberfläche bzw. eine Eindringtiefe des Bohrers in das Werkstück angezeigt wird. Eine derartige Vorrichtung zur Bestimmung einer Eindringtiefe ist in der europäischen Patentschrift EP 1 464 428 B1 offenbart.

Des Weiteren ist gemäß dem Stand der Technik eine Eindringtiefenbestimmungsvorrichtung auf einer Bohrwerkzeugmaschine bekannt, die eine Messeinheit mit einer Leuchtdiode und einer Lichtsensoreinheit umfasst. Die Lichtsensoreinheit enthält dabei zwei Sensoren. Bei dieser Vorrichtung wird ein Lichtstrahl von der Leuchtdiode ausgesendet und von der Werkstückoberfläche reflektiert. Der Lichtsensor dient zum Sensieren von Licht, das von der Leuchtdiode emittiert und an der Werkstückoberfläche reflektiert wird. Das Verhältnis der von den beiden Sensoren der Lichtsensoreinheit erfassten Lichtintensitäten ist durch den Reflexionswinkel des sensierten Lichtanteils an der Werkstückoberfläche bestimmt. Der Reflexionswinkel ist wiederum durch den Abstand der Messeinheit bzw. der Bohrwerkzeugmaschine von der Werkstückoberfläche bestimmt. Durch den ermittelten Abstand der Messeinheit bzw. der Bohrwerkzeugmaschine zu der Werkstückoberfläche kann die Eindringtiefe in das Werkstück bestimmt werden. Eine derartige Vorrichtung zur Bestimmung einer Eindringtiefe ist in der deutschen Patentanmeldung DE 10 2004 024 990 A1 offenbart.

Die vorstehend beschriebenen Vorrichtungen zur Bestimmung einer Eindringtiefe gemäß dem Stand der Technik sind relativ komplex in ihrem Aufbau sowie in der Handhabung. Aufgrund dieser Komplexität kann es häufig zu einer fehlerhaften Verwendung dieser Vorrichtungen kommen. Darüber hinaus sind diese Vorrichtungen durch ihre Komplexität störanfällig, aufwendig in der Wartung und teuer.

Aufgabe der vorliegenden Erfindung ist es daher, eine Vorrichtung zur Bestimmung einer Eindringtiefe in einem mit einem Bohrwerkzeug einer Bohrwerkzeugmaschine von einer Werkstückoberfläche aus in ein Werkstück gebohrten Bohrloch zur Verfügung zu stellen, die im Vergleich zum Stand der Technik einen weniger komplexen Aufbau sowie eine einfachere Handhabung gewährleistet.

Diese Aufgabe wird erfindungsgemäss durch den Gegenstand des unabhängigen Anspruchs 1 gelöst. Weitere Ausführungsformen des erfindungsgemässen Gegenstands finden sich in den abhängigen Unteransprüchen.

Es wird eine Vorrichtung zur Bestimmung einer Eindringtiefe in einem mit einem Bohrwerkzeug einer Bohrwerkzeugmaschine von einer Werkstückoberfläche aus in ein Werkstück gebohrten Bohrloch bereitgestellt, enthaltend wenigstens eine Lichtquelle zum Projizieren eines Lichtfelds beispielsweise an einem von der Bohrwerkzeugmaschine zu bearbeitenden Werkstück.

Erfindungsgemäss ist die Lichtquelle so zu der Bohrwerkzeugmaschine positioniert, dass eine Mittelachse der Lichtquelle in einem Winkel zu einer Mittelachse der Bohrwerkzeugmaschine verläuft und wenigstens ein erstes Blockierungselement zum teilweisen Abdecken der Lichtquelle vorgesehen sind, welche eine Skaliereinrichtung an dem Lichtfeld erzeugen. Dadurch, dass die Mittelachse der Lichtquelle nicht parallel (d.h. in einem Winkel) zu der Mittelachse der Bohrwerkzeugmaschine verläuft scheint sich die Skaliereinrichtung entsprechend einer Bewegung der Bohrwerkzeugmaschine von oder zu der Werkstückoberfläche relativ zu dem Lichtfeld zu bewegen. Gemäß dieser Relativbewegung der Skaliereinrichtung zu dem Lichtfeld kann der Anwender eine Veränderung des Abstands zwischen der Bohrwerkzeugmaschine und dem Werkstück ermitteln und somit die Eindringtiefe des Werkzeugs in das Werkstück bestimmen.

Gemäß einer weiteren vorteilhaften Ausführungsform der vorliegenden Erfindung kann es möglich sein, dass die Skaliereinrichtung zumindest eine erste Schattierung und eine zweite Schattierung an dem Lichtfeld enthält. Mit Hilfe der erzeugten Schatten wird ein farblicher Kontrast auf dem Lichtfeld erzeugt, anhand dessen der Anwender die Relativbewegung der Skaliereinrichtung zu dem Lichtfeld aufgrund der Bewegung der Bohrwerkzeugmaschine von oder zu der Werkstückoberfläche besser erkennen kann.

Um eine bestmögliche Darstellung des Lichtfelds auf der Werkstückoberfläche zu gewährleisten kann es gemäß einer weiteren vorteilhaften Ausführungsform der vorliegenden Erfindung möglich sein, dass die Mittelachse der Lichtquelle und die Mittelachse der Bohrwerkzeugmaschine in einer Ebene liegen.

Entsprechend einer weiteren vorteilhaften Ausführungsform der vorliegenden Erfindung kann es möglich sein, dass die Skaliereinrichtung wenigstens teilweise an einem Rand des Lichtfeldes erzeugbar ist. Hierdurch kann erreicht werden, dass die Mitte bzw. der zentrale Bereich des Lichtfelds von der Skaliereinrichtung unbeeinträchtigt bleibt, sodass das Lichtfeld im Wesentlichen als Beleuchtung des Bereichs der Werkstückoberfläche genutzt werden kann, die von dem Anwender mit dem Bohrwerkzeug bearbeitet wird. Die Lichtquelle bzw. das von der Lichtquelle erzeugte Lichtfeld ist damit weiterhin als Arbeitsbeleuchtung nutzbar.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine perspektivische Ansicht einer Bohrwerkzeugmaschine mit einer erfindungsgemäßen Vorrichtung zur Bestimmung einer Eindringtiefe in ein Werkstück;
- Fig. 2: eine Seitenansicht der Bohrwerkzeugmaschine mit der erfindungsgemäßen Vorrichtung zur Bestimmung einer Eindringtiefe in ein Werkstück;
- Fig. 3: eine Draufsicht auf die erfindungsgemäße Vorrichtung zur Bestimmung einer Eindringtiefe in ein Werkstück gemäß einer ersten Ausführungsform;
- Fig. 4: eine Draufsicht auf die erfindungsgemäße Vorrichtung zur Bestimmung einer Eindringtiefe in ein Werkstück gemäß einer zweiten Ausführungsform;
- Fig. 5: eine Seitenansicht auf die erfindungsgemäße Vorrichtung zur Bestimmung einer Eindringtiefe in ein Werkstück gemäß der ersten Ausführungsform;
- Fig. 6: eine weitere perspektivische Ansicht der Bohrwerkzeugmaschine mit der erfindungsgemäßen Vorrichtung zur Bestimmung einer Eindringtiefe in ein Werkstück zusammen mit einer vertikalen Ebene;
- Fig. 7: eine weitere Seitenansicht der Bohrwerkzeugmaschine mit der erfindungsgemäßen Vorrichtung zur Bestimmung einer Eindringtiefe in ein Werkstück zusammen mit dem durch die Lichtquelle an der Werkstückoberfläche erzeugten Lichtfleck in einem ersten Abstand der Bohrwerkzeugmaschine zu der Werkstückoberfläche;
- Fig. 8: eine weitere Seitenansicht der Bohrwerkzeugmaschine mit der erfindungsgemäßen Vorrichtung zur Bestimmung einer Eindringtiefe in ein Werkstück zusammen mit dem durch die Lichtquelle an der Werkstückoberfläche erzeugten Lichtfleck in einem zweiten Abstand der Bohrwerkzeugmaschine zu der Werkstückoberfläche;
- Fig. 9: eine Darstellung des durch die Lichtquelle an der Werkstückoberfläche erzeugten Lichtflecks gemäß eines ersten Abstands der Bohrwerkzeugmaschine zu der Werkstückoberfläche;
- Fig. 10: eine Darstellung des durch die Lichtquelle an der Werkstückoberfläche erzeugten Lichtflecks gemäß eines zweiten Abstands der Bohrwerkzeugmaschine zu der Werkstückoberfläche;
- Fig. 11: eine Darstellung des durch die Lichtquelle an der Werkstückoberfläche erzeugten Lichtflecks gemäß eines dritten Abstands der Bohrwerkzeugmaschine zu der Werkstückoberfläche;
- Fig. 12: eine Darstellung des durch die Lichtquelle an der Werkstückoberfläche erzeugten Lichtflecks gemäß einer zweiten Ausführungsform;
- Fig. 13: eine Darstellung des durch die Lichtquelle an der Werkstückoberfläche erzeugten Lichtflecks gemäß einer dritten Ausführungsform; und
- Fig. 14: eine Darstellung des durch die Lichtquelle an der Werkstückoberfläche erzeugten Lichtflecks gemäß einer vierten Ausführungsform.

### Ausführungsbeispiel:

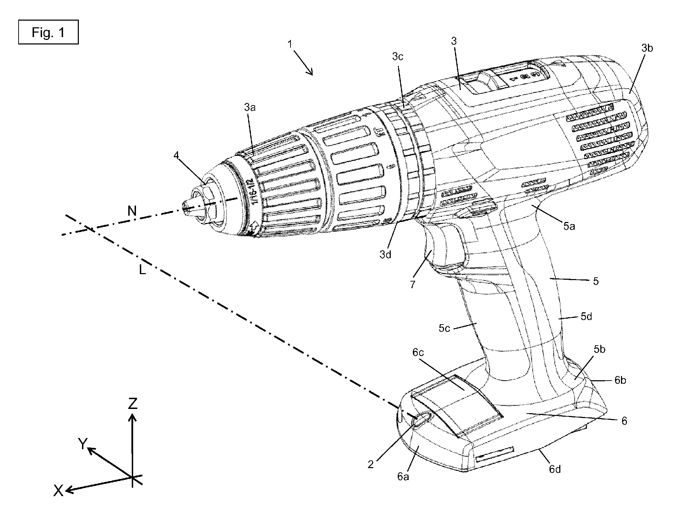

Fig. 1 zeigt eine erste perspektivische Ansicht einer Bohrwerkzeugmaschine 1 mit einer erfindungsgemäßen Vorrichtung 2 zur Bestimmung einer Eindringtiefe eines nicht gezeigten Bohrwerkzeugs in ein Werkstück W.

Die Bohrwerkzeugmaschine 1 enthält im Wesentlichen ein Gehäuse 3, eine Werkzeugaufnahme 4, einen Handgriff 5 und Fußteil 6.

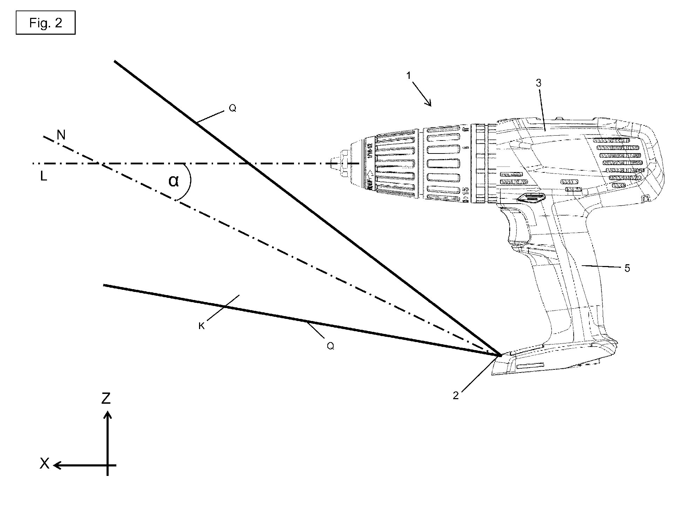

Das Gehäuse 3 enthält ein vorderes Ende 3a, ein hinteres Ende 3b, eine Oberseite 3c und eine Unterseite 3d. An dem vorderen Ende 3a ist die Werkzeugaufnahme 4 positioniert. Mit Hilfe der Werkzeugaufnahme 4 kann ein (nicht gezeigtes) Bohrwerkzeug (sog. Bohrer) aufgenommen und gehalten werden. Durch das Gehäuse 3 sowie durch die Werkzeugaufnahme verläuft eine Mittelachse N in Richtung X (vgl. Fig. 1, 2 und 6).

Der Handgriff 5 enthält ein erstes Ende 5a, ein zweites Ende 5b, eine Vorderseite 5c sowie eine Rückseite 5d. Wie in Fig. 1 gezeigt, ist der Handgriff 5 mit dem ersten Ende 5a an der Unterseite 3d des Gehäuses 3 befestigt.

Das Fußteil 6 enthält eine vorderes Ende 6a, ein hinteres Ende 6b, ein oberes Ende 6c und ein unteres Ende 6d. Das Fußteil 6 ist mit dem oberen Ende 6c an dem zweiten Ende 5b des Handgriffs 5 befestigt und erstreckt sich hauptsächlich in Richtung X.

Mit Hilfe des Fußteils 6 kann ein Akkumulator zur Stromversorgung mit der Bohrwerkzeugmaschine 1 verbunden werden. Der Akkumulator ist in den Figuren nicht gezeigt. An der Vorderseite des Handgriffs 5 ist ein Schalter 7 positioniert, mit dem die Bohrwerkzeugmaschine 1 ein- und ausgeschaltet sowie die Leistungsabgabe der Bohrwerkzeugmaschine 1 reguliert werden kann.

An dem oberen Ende 6c und in der Nähe des vorderen Endes 6a des Fußteils 6 ist eine Vorrichtung 2 zur Bestimmung einer Eindringtiefe in einem mit dem Bohrwerkzeug der Bohrwerkzeugmaschine 1 von einer Werkstückoberfläche WO aus in ein Werkstück W gebohrten Bohrloch positioniert.

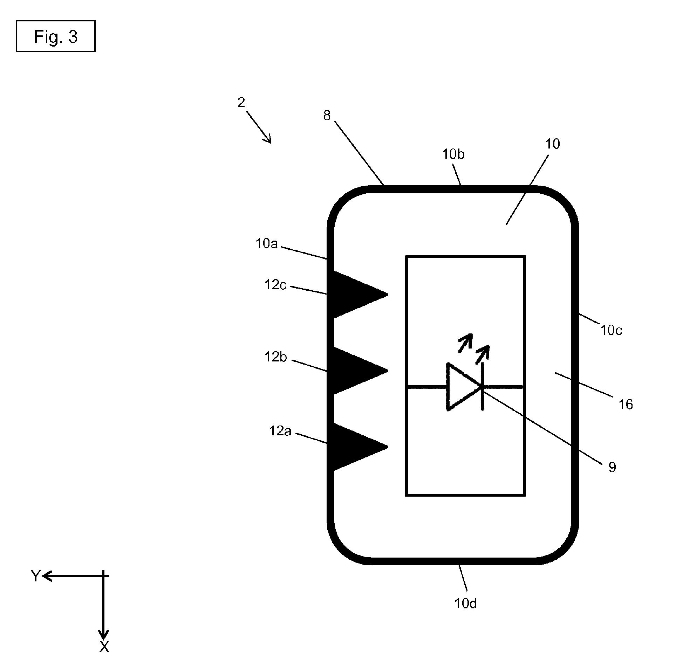

Wie in den Figuren 3, 4 und 5 gezeigt, enthält die Vorrichtung 2 zur Bestimmung einer Eindringtiefe im Wesentlichen ein Gehäuse 8, eine Lichtquelle 9, eine Linse 10 sowie ein erstes, zweites und drittes Blockierungselement 12a, 12b, 12c.

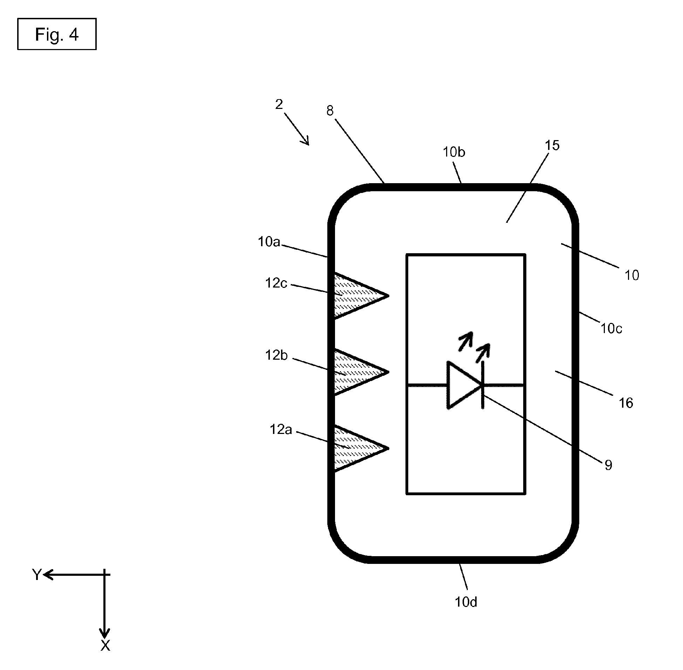

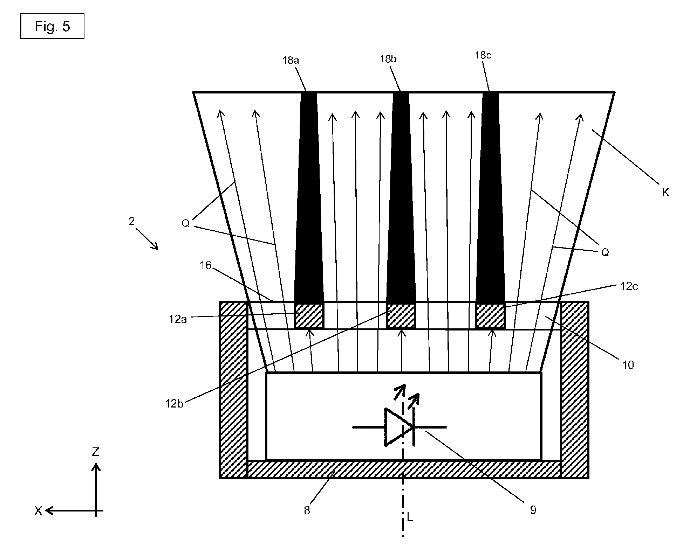

Fig. 3 zeigt dabei in einer Draufsicht die Vorrichtung 2 zur Bestimmung einer Eindringtiefe gemäß einer ersten Ausführungsform. Fig. 4 zeigt in einer Draufsicht die Vorrichtung 2 zur Bestimmung einer Eindringtiefe gemäß einer zweiten Ausführungsform. Fig. 5 zeigt in einer Seitenansicht in Richtung Y die Vorrichtung 2 zur Bestimmung einer Eindringtiefe gemäß der ersten Ausführungsform.

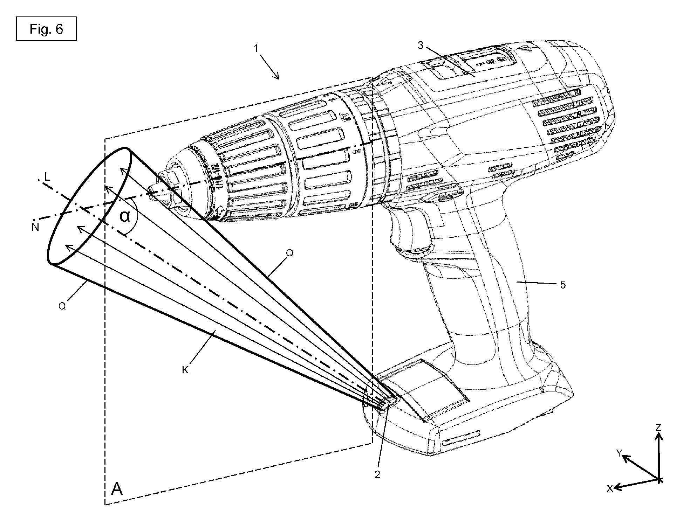

Wie insbesondere in Fig. 5 gezeigt, bildet das Gehäuse 8 der Vorrichtung 2 einen Hohlraum 13, in dem die Lichtquelle 9 positioniert ist. Die Lichtquelle 9 ist in Form einer Leuchtdiode ausgestaltet. Es ist jedoch auch möglich, dass die Lichtquelle 9 in Form eines oder mehrerer anderer Leuchtmittel gestaltet ist. Der Hohlraum 13 des Gehäuses 8 ist mit der Linse 10 abgedeckt. Wie in Fig. 5 gezeigt, enthält die Linse 10 eine erste Seitenkante 10a, eine zweite Seitenkante 10b, eine dritte Seitenkante 10c und eine vierte Seitenkante 10d. Die Linse 10 dient dazu, dass von der Lichtquelle 9 emittierte Licht zu bündeln. Hierdurch tritt das von der Lichtquelle 9 emittierte Licht im Wesentlichen in Form eines Kegelstumpfs K aus dem Gehäuse 8 der Vorrichtung 2. Des Weiteren enthält die Lichtquelle 9 eine Mittelachse L, die im Wesentlichen durch die Längsachse bzw. koaxial zu der Längsachse des Lichtkegelstumpfs K verläuft (vgl. Fig. 5 und 6).

Wie in Fig. 6 dargestellt, befinden sich die Mittelachse L der Lichtquelle 9 und die Mittelachse des Gehäuses 3 sowie der Werkzeugaufnahme N auf derselben Ebene A. Die Ebene A erstreckt sich in Richtung X und Z. Darüber hinaus stehen die Mittelachse L der Lichtquelle 9 und die Mittelachse des Gehäuses 3 sowie der Werkzeugaufnahme N in einem Winkel α zueinander.

Wie in den Fig. 3, 4 und 5 dargestellt, sind an der Linse 10 das erste, zweite und dritte Blockierungselement positioniert. Gemäß der ersten Ausführungsform sind die drei Blockierungselemente 12a, 12b, 12c jeweils in Form eines Quaders mit einer dreieckigen Grundfläche ausgestaltet und an der ersten Seitenkante 10a der Linse 10 in gleichmäßigen Abständen zueinander befestigt (vgl. Fig. 3). Hierbei ragen die drei Blockierungselemente 12a, 12b, 12c gegen die Richtung Y in die Linsenoberfläche 16 hinein. Gemäß der zweiten Ausführungsform sind die drei Blockierungselemente 12a, 12b, 12c jeweils in Form einer Einkerbung in der Linsenoberfläche 16 gestaltet (vgl. Fig. 4). Entsprechend einer weiteren (nicht gezeigten) Ausführungsform können die drei Blockierungselemente 12a, 12b, 12c auch in Form einer Kante in der Linsenoberfläche 16 und/oder durch ein Anschleifen der Linsenoberfläche 16 gestaltet sein.

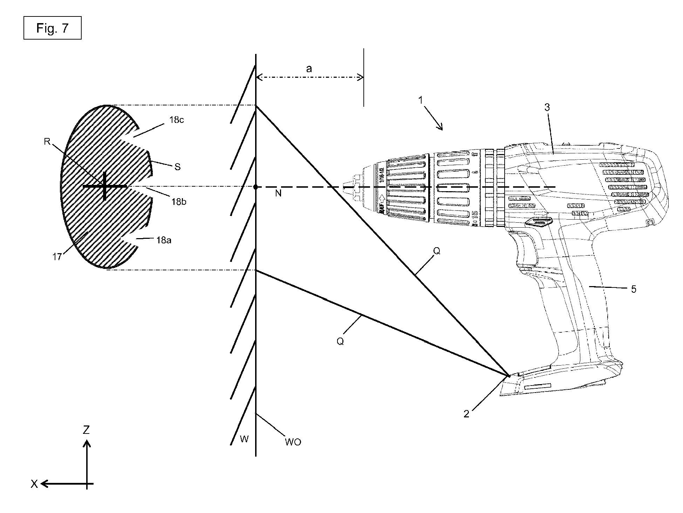

Wie in Fig. 5 schematisch dargestellt, dienen die drei Blockierungselemente 12a, 12b, 12c dazu, das aus dem Gehäuse 8 austretende Licht Q der Lichtquelle 9 teilweise so zu blockieren, dass in einem von der Lichtquelle 9 erzeugten Lichtfeld 17 eine erste, eine zweite und eine dritte Schattierung 18a, 18b, 18c erzeugt werden. Wie in den Fig. 7 bis 14 gezeigt, sind diese drei Schattierungen 18a, 18b, 18c aufgrund der Positionierung der Blockierungselemente 12a, 12b, 12c untereinander in einem regelmäßigen Abstand zueinander an dem Rand S des auf die Werkstückoberfläche WO projizierten Lichtfelds 17 erkennbar. Die drei Schattierungen 18a, 18b, 18c bilden eine Skaliereinrichtung 19 als Referenzeinrichtung zum Bestimmen der Eindringtiefe eines Bohrwerkzeugs in ein Werkstück W bzw. zum Bestimmen der Veränderung eines Abstands der Bohrwerkzeugmaschine 1 zu der Werkstückoberfläche WO.

Wenn sich die Bohrwerkzeugmaschine 1 mit der Vorrichtung zur Bestimmung einer Eindringtiefe bzw. zum Bestimmen der Veränderung eines Abstands der Bohrwerkzeugmaschine 1 zu der Werkstückoberfläche WO in einem ersten Abstand a zu der Werkstückoberfläche befindet (wie in Fig. 7 gezeigt), ist ein Referenzpunkt R der Bohrwerkzeugmaschine 1 ungefähr auf einer Höhe mit der zweiten Schattierung 18b. Der Referenzpunkt R ist durch die Stelle gebildet, an der ein Bohrwerkzeug auf die Werkstückoberfläche WO trifft bzw. treffen wird, wenn die Bohrwerkzeugmaschine 1 weiter auf das Werkstück W bewegt wird. Das Bohrwerkzeug ist in den Figuren nicht dargestellt.

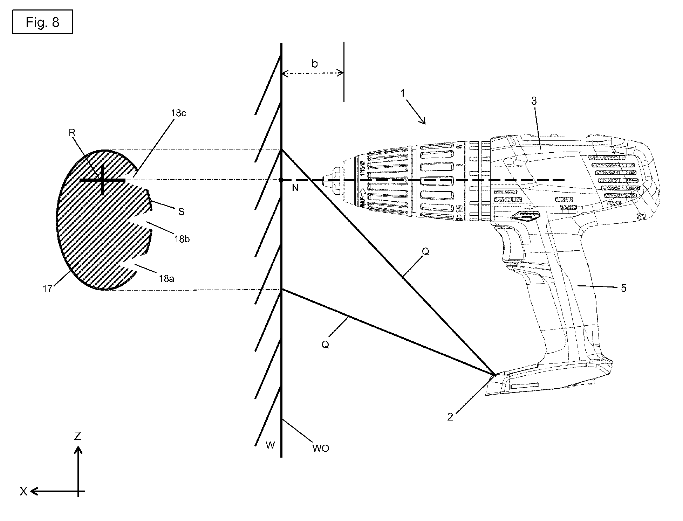

Wenn sich die Bohrwerkzeugmaschine 1 mit der Vorrichtung zur Bestimmung einer Eindringtiefe bzw. zum Bestimmen der Veränderung eines Abstands der Bohrwerkzeugmaschine 1 zu der Werkstückoberfläche WO auf die Werkstückoberfläche WO zubewegt (d.h. in Richtung X) und sich dadurch in einem zweiten Abstand b zu der Werkstückoberfläche WO befindet (wie in Fig. 8 gezeigt), ist ein Referenzpunkt R der Bohrwerkzeugmaschine 1 ungefähr auf einer Höhe mit der dritten Schattierung 18c. Es ist zu beachten, dass sich das Lichtfeld 17 aufgrund der Verringerung des Abstands der Bohrwerkzeugmaschine 1 zu der Werkstückoberfläche WO (d.h. Abstand a zu Abstand b) etwas verkleinert. Die Abstände der drei Schattierungen 18a, 18b, 18c zueinander bleiben jedoch hierdurch unverändert und dienen als Referenzeinrichtung.

Anhand der Veränderung des Referenzpunktes von der zweiten Schattierung 18b zu der dritten Schattierung 18c erkennt der Anwender wie tief das Bohrwerkzeug in das Werkstück W eingedrungen ist, da sich der Abstand der einzelnen Schattierung 18a, 18b, 18c zueinander in eine entsprechende Wegstrecke in Richtung X interpretieren lassen. Hierzu ist beispielsweise an der Bohrwerkzeugmaschine 1 eine Beschreibung vorgesehen, mit deren Hilfe der Anwender erfährt, dass ein Abstand zwischen zwei Schattierungen (d.h. 18a zu 18b oder 18b zu 18c) einer Wegstrecke von 10 mm in Richtung X entspricht. Bei einer Veränderung des Referenzpunkts von der Höhe der ersten Schattierung 18a zu der Höhe der dritten Schattierung 18c hat sich die Bohrwerkzeugmaschine 1 um 20 mm in Richtung X bewegt.

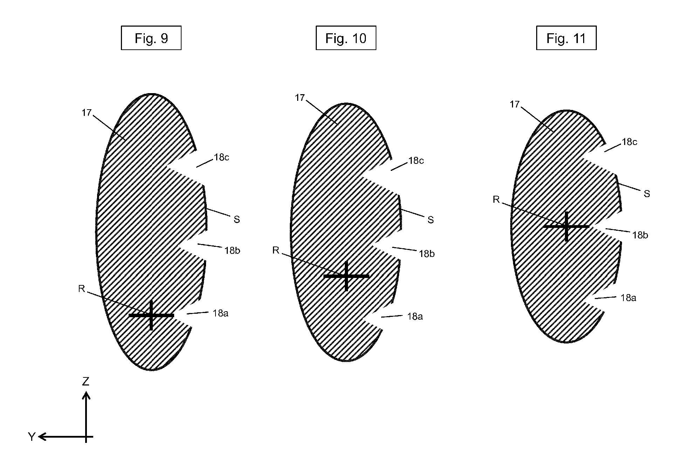

In Fig. 9 bis 11 ist das Lichtfeld 17 auf der Werkstückoberfläche WO dargestellt, bei dem die Bohrwerkzeugmaschine 1 in drei unterschiedlichen Abständen zu dem Werkstück W entfernt ist.

Der Abstand der Bohrwerkzeugmaschine 1 zu der Werkstückoberfläche WO nimmt von der Fig. 9 zu der Fig. 10 stetig ab. Der Referenzpunkt R bewegt sich entsprechend des geringer werdenden Abstands der Bohrwerkzeugmaschine 1 zu der Werkstückoberfläche WO in dem Lichtfeld 17 in Richtung Z. Entsprechend der vorstehend erwähnten Interpretation der Abstände der Schattierungen 18a, 18b, 18c zueinander (Abstand von Schattierung entspricht jeweils 10 mm in Richtung X) hat sich von Fig. 9 zu Fig. 10 die Bohrwerkzeugmaschine 1 um 5 mm auf die Werkstückoberfläche WO zubewegt. Von Fig. 10 zu Fig. 11 hat sich die Bohrwerkzeugmaschine 1 um weitere 5 mm auf die Werkstückoberfläche WO zubewegt. Von Fig. 9 zu Fig. 11 hat sich die Bohrwerkzeugmaschine 1 um 10 mm auf die Werkstückoberfläche WO zubewegt.

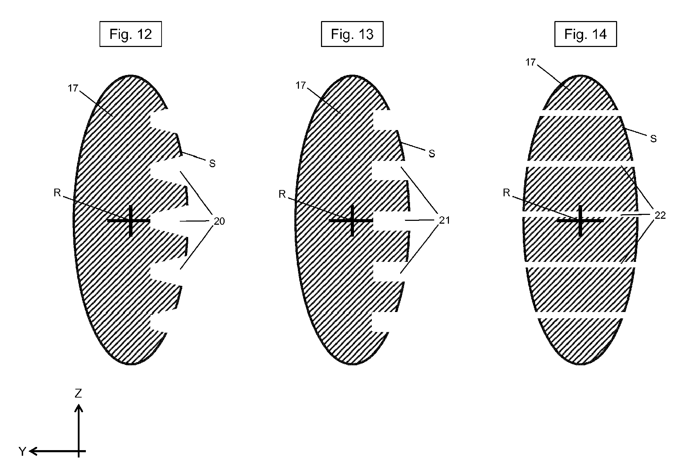

Fig. 12 zeigt eine Darstellung des durch die Lichtquelle 9 an der Werkstückoberfläche WO erzeugten Lichtflecks 17 gemäß einer zweiten Ausführungsform. Hierbei sind die Blockierungselemente 12a, 12b, 12c jeweils in Form eines Quaders mit einer trapezförmigen Grundfläche ausgestaltet, sodass die daraus entstehenden Schattierungen 20 in dem Lichtfeld 17 in trapezförmiger Form dargestellt sind.

Fig. 13 zeigt eine Darstellung des durch die Lichtquelle 9 an der Werkstückoberfläche WO erzeugten Lichtflecks 17 gemäß einer dritten Ausführungsform. Hierbei sind die Blockierungselemente 12a, 12b, 12c jeweils in Form eines Quaders mit einer rechteckigen Grundfläche ausgestaltet, sodass die daraus entstehenden Schattierungen 21 in dem Lichtfeld 17 in rechteckige Form dargestellt sind.

Fig. 14 zeigt eine Darstellung des durch die Lichtquelle 9 an der Werkstückoberfläche WO erzeugten Lichtflecks 17 gemäß einer vierten Ausführungsform. Hierbei sind die Blockierungselemente 12a, 12b, 12c jeweils in Form eines Quaders mit einer rechteckigen Grundfläche ausgestaltet. Im Gegensatz zu der dritten Ausführungsform erstrecken sich jedoch die Blockierungselemente 12a, 12b, 12c gemäß der vierten Ausführungsform über die gesamte Linsenoberfläche 16 der Lichtquelle 9, sodass die daraus entstehenden Schattierungen 22 in dem Lichtfeld 17 in Linien dargestellt sind.

## Patentansprüche

1. Vorrichtung (2) zur Bestimmung einer Eindringtiefe in einem mit einem Bohrwerkzeug einer Bohrwerkzeugmaschine (1) von einer Werkstückoberfläche (WO) aus in ein Werkstück (W) gebohrten Bohrloch, enthaltend,
wenigstens eine Lichtquelle (9) zum Projizieren eines Lichtfelds (17) beispielsweise an einem von der Bohrwerkzeugmaschine (1) zu bearbeitenden Werkstück (W),
**dadurch gekennzeichnet, dass** die Lichtquelle (9) so zu der Bohrwerkzeugmaschine (1) positioniert ist, dass eine Mittelachse (L) der Lichtquelle (9) in einem Winkel (α) zu einer Mittelachse (N) der Bohrwerkzeugmaschine (1) verläuft und wenigstens ein erstes Blockierungselement (12a, 12b, 12c) zum teilweisen Abdecken der Lichtquelle (9) vorgesehen sind, welches eine Skaliereinrichtung (19) an dem Lichtfeld (17) erzeugt.

2. Vorrichtung (2) nach Anspruch 1,
**dadurch gekennzeichnet, dass** die Skaliereinrichtung (19) zumindest eine erste Schattierung und eine zweite Schattierung (18a, 18b, 18c, 20, 21, 22) an dem Lichtfeld (17) enthält.

3. Vorrichtung (2) nach Anspruch 1 oder 2,
**dadurch gekennzeichnet, dass** die Mittelachse (L) der Lichtquelle (9) und die Mittelachse (N) der Bohrwerkzeugmaschine (1) in einer Ebene (A) liegen.

4. Vorrichtung (2) nach wenigstens einem der Ansprüche 1 bis 3,
**dadurch gekennzeichnet, dass** die Skaliereinrichtung (19) wenigstens teilweise an einem Rand (S) des Lichtfeldes (17) erzeugbar ist.
